# DEMANDE DE BREVET EUROPEEN

(11) **EP 4 733 995 A1**
(43) Date de publication de la demande: **29.04.2026**
(21) Numéro de dépôt: 24306776.6
(22) Date de dépôt: 22.10.2024
(51) Int. Cl.: G06N 3/047, G06N 3/088, G06N 20/00, G06T 19/00, G06V 10/774

(54) **PROCÉDÉ DE GÉNÉRATION DE DONNÉES, PROGRAMME D'ORDINATEUR ET DISPOSITIF DE CALCUL ASSOCIÉS**

(71) Demandeur: BULL SAS, 78340 Les Clayes-Sous-Bois (FR)
(72) Inventeur: DRUART, Anaïs, 38100 GRENOBLE (FR); LEMAACHI, Salahidine, 38100 ECHIROLLES (FR); WINCKLER, Nicolas, 38190 VILLARD BONNOT (FR)
(74) Mandataire: IPAZ

(57) **Abrégé**

L'invention concerne un procédé (20) de génération d'images synthétiques, le procédé étant mis en oeuvre par ordinateur et comprenant les étapes :
- génération (22), à partir d'une image de référence :
• d'une description textuelle d'une scène représentée sur ladite image de référence ; et
• de métadonnées relatives à la scène représentée sur ladite image de référence et/ou à ladite image de référence ;

- fourniture (26), en entrée d'un modèle de contrôle (10) couplé à un modèle génératif (12), d'au moins une partie des métadonnées générées ;
- calcul (26), au moyen du modèle génératif (12), d'au moins une image synthétique à partir d'une sortie du modèle de contrôle et de la description textuelle générée relatives à l'image de référence ; et
- stockage (34), dans un jeu de données (14), d'au moins une image synthétique calculée.

## Description

### Domaine technique

La présente invention concerne un procédé de génération d'images synthétiques.

L'invention concerne également un programme d'ordinateur et un dispositif de calcul mettant en oeuvre un tel procédé.

L'invention s'applique au domaine de l'informatique, et plus précisément de la génération d'images, en particulier pour l'entraînement de modèles d'intelligence artificielle.

### État de la technique

Il est connu de générer des images synthétiques pour l'entraînement d'un modèle d'intelligence artificielle (dit « modèle cible »), par exemple un modèle d'apprentissage profond. De telles images synthétiques sont alors, par exemple, utilisées comme données d'entrée lors de l'entraînement du modèle cible.

En particulier, les méthodes utilisées pour produire de telles images synthétiques offrent généralement un contrôle total sur la scène représentée (comme la position des objets ou les effets de lumière).

En outre, de telles méthodes sont souvent prévues pour générer automatiquement des annotations complexes associées aux images synthétiques produites, telles que des boîtes englobantes, des cartes de segmentation ou encore des cartes de profondeur, ce qui est avantageux dans le cadre de l'entraînement mentionné précédemment.

En général, de telles méthodes mettent en oeuvre un modèle 3D pour produire ces images synthétiques.

Néanmoins, une telle approche ne donne pas entière satisfaction.

En effet, l'entraînement du modèle cible uniquement sur la base d'images synthétiques induit souvent un biais d'apprentissage.

Un tel biais d'apprentissage (dit « *domain shift »* ou « *context shift* » en anglais) se manifeste lorsque le modèle cible, entraîné sur la base d'images synthétiques, voit ses performances se dégrader lors d'une phase d'inférence réalisées sur la base d'images réelles.

En outre, la diversité limitée des modèles 3D disponibles, en raison des coûts associés à leur acquisition, est également susceptible d'engendrer un second type de biais. Plus précisément, un tel manque de diversité est susceptible de se traduire par un manque de diversité au sein des images synthétiques produites, résultant en un surapprentissage du modèle cible, lors de son entraînement, sur certains motifs spécifiques. Ceci a pour effet d'affecter la capacité du modèle cible à généraliser sur de nouvelles classes d'objets.

Un but de la présente invention est de remédier à au moins un des inconvénients de l'état de la technique.

Un autre but de l'invention est de proposer un procédé de génération d'images synthétiques qui fournisse des images synthétiques plus réalistes, par rapport aux méthodes connues, et qui diversifie l'apparence des objets pour produire des images plus riches sur le plan sémantique.

### Exposé de l'invention

À cet effet, l'invention concerne un procédé du type précité, dans lequel

Procédé de génération d'images synthétiques, le procédé étant mis en oeuvre par ordinateur et comprenant les étapes :
- génération, à partir d'une image de référence :
   - d'une description textuelle d'une scène représentée sur ladite image de référence ; et
   - de métadonnées relatives à la scène représentée sur ladite image de référence et/ou à ladite image de référence ;
- fourniture, en entrée d'un modèle de contrôle couplé à un modèle génératif, d'au moins une partie des métadonnées générées ;
- calcul, au moyen du modèle génératif, d'au moins une image synthétique à partir d'une sortie du modèle de contrôle et de la description textuelle générée relatives à l'image de référence ; et
- stockage, dans un jeu de données, d'au moins une image synthétique calculée.

En effet, le recours aux métadonnées et à la description textuelle autorise une diversification de l'apparence des objets et un enrichissement des images sur le plan sémantique, tout en conservant une similarité avec l'image de référence fournie en entrée. En outre, grâce au recours à un modèle génératif contraint par un modèle de contrôle, la génération d'images synthétiques réalistes est possible.

Il en résulte qu'un modèle d'intelligence artificielle entraîné sur la base des images synthétiques produites grâce au procédé selon l'invention est moins sujet au surapprentissage et au biais d'apprentissage que s'il avait été entraîné sur la base d'images synthétiques générées suivant les méthodes usuelles.

De façon avantageuse, le procédé selon l'invention présente une ou plusieurs des caractéristiques suivantes, prises isolément ou selon toute combinaison techniquement possible :
le procédé comprend, préalablement à l'étape de calcul, une inclusion, dans la description textuelle, d'une information indicative du fait que l'image de référence est une image réelle ;
le procédé comprend, en outre, une étape de filtrage comprenant un rejet de chaque image synthétique ne satisfaisant pas un critère prédéterminé ;
l'étape de filtrage comprend :
   - une détermination d'une vectorisation de l'image synthétique calculée dans un espace vectoriel prédéterminé ;
   - un rejet de l'image synthétique si la vectorisation correspondante présente :
      - une distance supérieure à une première distance prédéterminée, relativement à un premier secteur prédéterminé de l'espace vectoriel, le premier secteur étant représentatif d'images satisfaisantes d'un ensemble d'images d'étalonnage prédéterminé ; et/ou
      - une distance inférieure à une deuxième distance prédéterminée, relativement à une deuxième secteur prédéterminé de l'espace vectoriel, le deuxième secteur étant représentatif d'images insatisfaisantes de l'ensemble d'images d'étalonnage.
l'espace vectoriel prédéterminé est un espace des distorsions ou un espace sémantique ;
le procédé comprend, en outre, une association, à chaque image synthétique stockée dans le jeu de données, d'au moins une partie des métadonnées produites à l'issue de l'étape de génération ;
le procédé comprend, en outre, un entraînement d'un modèle de vision par ordinateur sur la base du jeu de données, chaque image synthétique formant une entrée du modèle de vision par ordinateur, les métadonnées associées formant une sortie attendue du modèle de vision par ordinateur pour ladite entrée ;
le modèle de contrôle et le modèle génératif ont été préalablement entraînés conjointement au cours d'une phase d'entraînement, sur la base d'un jeu de données d'entraînement comprenant une pluralité d'images d'entraînement réelles et/ou artificielles,

chaque image d'entraînement étant associée à :
   - des métadonnées correspondantes relatives à la scène représentée sur ladite image d'entraînement et/ou à ladite image d'entraînement ; et
   - une description textuelle correspondante comprenant, en outre, une information indicative du fait que l'image d'entraînement est une image réelle ou une image artificielle ;
la phase d'entraînement comprenant, pour chaque image d'entraînement
   - une fourniture des métadonnées correspondantes au modèle de contrôle ; et
   - un calcul, par le modèle génératif, d'une image synthétique à partir de la description textuelle et d'une sortie du modèle de contrôle, l'image d'entraînement formant une sortie attendue du modèle génératif ;
le procédé comprend une altération d'au moins une partie des métadonnées préalablement à leur fourniture au modèle de contrôle, l'altération comportant, de préférence, un ajout d'un bruit aléatoire, une suppression aléatoire d'objets dans des masques de segmentation, et/ou une distorsion de la segmentation ;
la phase d'entraînement comprend, en outre, un enrichissement du jeu de données d'entraînement avec tout ou partie des images synthétiques calculées, chaque image synthétique ajoutée au jeu de données d'entraînement étant associée à une description textuelle comprenant une information indicative du fait que ladite image synthétique est une image artificielle.

Selon un autre aspect de l'invention, il est proposé un programme d'ordinateur comprenant des instructions exécutables qui, lorsqu'elles sont exécutées par ordinateur, mettent en oeuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un dispositif de calcul pour la génération d'images synthétiques, le dispositif de calcul comprenant :
- une unité de traitement ; et
- une mémoire configurée pour stocker :
   - un modèle génératif ; et
   - un modèle d'intelligence artificielle couplé au modèle génératif et formant un modèle de contrôle du modèle génératif ;
   - un jeu de données,
   l'unité de traitement étant configurée pour :
   - générer, à partir d'une image de référence :
      - une description textuelle d'une scène représentée sur ladite image de référence ; et
      - des métadonnées relatives à la scène représentée sur ladite image de référence et/ou à ladite image de référence ;
   - fournir au moins une partie des métadonnées générées en entrée du modèle de contrôle ;
   - mettre en oeuvre le modèle génératif pour calculer au moins une image synthétique à partir d'une sortie du modèle de contrôle et de la description textuelle générée relatives à l'image de référence ; et
   - stocker au moins une image synthétique calculée dans le jeu de données.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

### Brève description des figures

L'invention sera mieux comprise à la lecture de la description qui va suivre, donnée uniquement à titre d'exemple non limitatif et faite en se référant aux dessins annexés sur lesquels :
la figure 1 est une représentation schématique d'un dispositif de calcul selon l'invention ; et
la figure 2 est un ordinogramme d'un procédé de génération de données mis en oeuvre par le dispositif de calcul de la figure 1 ;
la figure 3 est un exemple d'image de référence fournie en entrée du dispositif de calcul de la figure 1 ;
la figure 4 est une image représentative de métadonnées déterminées par le dispositif de calcul de la figure 1 à partir de l'image de référence de la figure 3 ; et
la figure 5 est une image synthétique calculée par le dispositif de calcul de la figure 1 à partir de l'image de référence de la figure 3.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

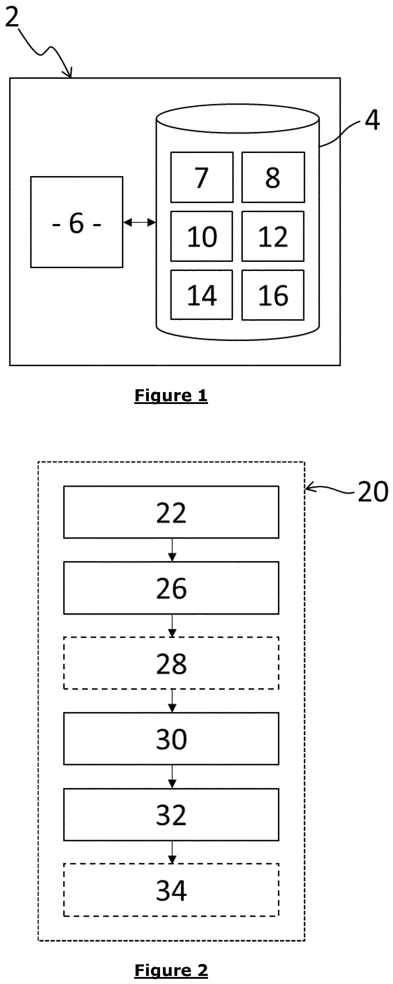

Un dispositif de calcul 2 selon l'invention est illustré par la figure 1.

Le dispositif de calcul 2 est destiné à générer au moins une image synthétique à partir d'une image de référence reçue en entrée.

Par exemple, l'image de référence est une image réelle, c'est-à-dire une image acquise au moyen un dispositif optique (numérique ou analogique), tel qu'un appareil photographique ou une caméra.

En variante, ou de façon complémentaire, l'image de référence est une image artificielle, c'est-à-dire générée, par exemple représentative d'une scène modélisée au moyen d'un moteur 3D.

Comme illustré par la figure 1, le dispositif de calcul 2 comprend une mémoire 4 et une unité de traitement 6 reliées entre elles.

### Mémoire 4

La mémoire 4 est configurée pour stocker un module de prétraitement 7, un modèle de transcription 8, un modèle de contrôle 10, un modèle génératif 12 et un jeu de données 14.

De préférence, la mémoire 4 est, en outre, configurée pour stocker un module de filtrage 16.

### Module de prétraitement 7

Le module de prétraitement 7 est configuré pour recevoir une image en entrée (en particulier, une image de référence) et pour fournir, en sortie, des métadonnées correspondantes, relatives à la scène représentée sur ladite image. En particulier, de telles métadonnées sont représentatives d'une apparence (c'est-à-dire de l'aspect visuel) de tout ou partie de la scène. En outre, le module de prétraitement 7 est configuré pour transmettre les métadonnées obtenues au modèle de contrôle 10.

De telles métadonnées comprennent, par exemple, des masques (ou cartes) de segmentation sémantique des objets présents dans la scène, des boîtes englobantes, des cartes de profondeurs, des classes des objets présents dans la scène, ou encore des contours des éléments représentés dans l'image de référence.

Par exemple, pour obtenir de tels contours, le module de prétraitement est configuré pour appliquer un filtre de Canny à l'image reçue en entrée.

De préférence, les métadonnées produites par le module de prétraitement comprennent une image composite obtenue en superposant les cartes de segmentation et les contours associés à l'image de référence.

Avantageusement, le module de prétraitement 7 est configuré pour altérer, au cours d'une phase d'entraînement du dispositif de calcul 2, tout ou partie des métadonnées obtenues avant de les transmettre au modèle de contrôle 10.

Une telle altération comprend, par exemple, l'ajout d'un bruit aléatoire, la suppression aléatoire d'objets, ou encore la distorsion de la segmentation.

Une telle altération est avantageuse, dans la mesure où elle contribue à accroître la robustesse des modèles d'intelligence artificielle mis en oeuvre par le dispositif de calcul 2 et éviter leur ajustement excessif.

### Modèle de transcription 8

Le modèle de transcription 8 est un modèle d'intelligence artificielle configuré pour recevoir une image en entrée (en particulier, une image de référence), et pour fournir, en sortie, un texte correspondant comportant une description d'une scène représentée sur ladite image. Par la suite, un tel texte est appelé « description textuelle ». En outre, le module de transcription 8 est configuré pour transmettre la description textuelle obtenue au modèle génératif 12.

Par exemple, la description textuelle délivrée en sortie du modèle de transcription 8 comprend une description de chaque objet représenté sur l'image correspondante fournie en entrée, ainsi que, de préférence, une relation spatiale entre lesdits objets et/ou des caractéristiques de l'image elle-même (telles qu'une taille, une résolution, etc.).

Un tel modèle de transcription (connu de l'homme du métier) a, par exemple, été préalablement entraîné sur la base d'un jeu de données d'entraînement comprenant une pluralité d'images formant des entrées du modèle, et, pour chaque image, une description textuelle formant une sortie attendue correspondante.

De préférence, le modèle de transcription 8 est le modèle BLIP, décrit par Junnan Li et al. dans la prépublication digitale « BLIP: Bootstrapping Bootstrapping Language-Image Pre-training for Unified Vision-Language Understanding and Generation », référencée arXiv:2201.12086.

Avantageusement, le modèle de transcription 8 est configuré pour altérer, au cours de la phase d'entraînement mentionnée précédemment, tout ou partie de la description textuelle obtenue, avant de la transmettre au modèle génératif 12.

Une telle altération comprend, par exemple, la suppression de tout ou partie de la description textuelle.

Une telle altération est avantageuse, dans la mesure où elle contribue à accroître la robustesse des modèles d'intelligence artificielle mis en oeuvre par le dispositif de calcul 2 et éviter leur ajustement excessif.

### Modèle de contrôle 10

Le modèle de contrôle 10 est un modèle d'intelligence artificielle couplé au modèle génératif 12.

Le modèle de contrôle 10 est configuré pour recevoir, en entrée, les métadonnées déterminées par le module de prétraitement 7 et relatives à une image fournie en entrée dudit module de prétraitement 7.

En outre, le modèle de contrôle 10 est configuré pour réaliser un contrôle du modèle génératif 12 (c'est-à-dire pour conditionner un comportement du modèle génératif 12) en fonction des métadonnées reçues depuis le module de prétraitement 7.

Plus précisément, le modèle de contrôle 10 est configuré pour transcrire les métadonnées appliquées à son entrée dans un espace latent compatible avec le modèle génératif 12, de façon à ce que lesdites métadonnées puissent, directement ou indirectement, être traitées par le modèle génératif 12 (par exemple, par au moins une couche du modèle génératif 12).

Par exemple, le modèle de contrôle 10 est le modèle ControlNet, décrit par Lvmin Zhang et al. dans la prépublication digitale « Adding Conditional Control to Text-to-Image Diffusion Models », référencée arXiv:2302.05543. Un tel modèle est, en particulier, adapté pour contrôler un modèle génératif dit « de diffusion ».

Par exemple, dans le cas où le modèle génératif 12 est un modèle d'intelligence artificielle présentant une architecture d'auto-encodeur, le modèle de contrôle 10 est, par exemple, une copie de l'encodeur du modèle génératif 12. Dans ce cas, un entraînement ultérieur du modèle de contrôle 10 et du modèle génératif 12 est réalisé de sorte que le modèle de contrôle 10 apprenne progressivement à contrôler le modèle génératif 12.

La façon dont le modèle de contrôle 10 coopère avec le modèle génératif 12 sera décrite de façon plus précise par la suite.

### Modèle génératif 12

Le modèle génératif 12 est un modèle d'intelligence artificielle configuré pour calculer (c'est-à-dire générer) au moins une image synthétique à partir de données textuelles représentatives d'une situation prédéterminée.

Plus précisément, le modèle génératif 12 est configuré pour recevoir, en entrée, la description textuelle délivrée par le modèle de transcription 8, de sorte que le modèle génératif 12 est configuré pour générer au moins une image synthétique en fonction de la description textuelle reçue en provenance du modèle de transcription 8.

Le modèle génératif 12 a été préalablement configuré pour réaliser un tel calcul d'images synthétiques. Par exemple, le modèle génératif 12 est un réseau de neurones préalablement entraîné à cet effet.

Par exemple, le modèle génératif 12 est le modèle Stable Diffusion, décrit par Robin Rombach et al. dans la prépublication digitale « High-Resolution Image Synthesis with Latent Diffusion Models », référencée arXiv:2112.10752.

En outre, le modèle génératif 12 est configuré pour calculer chaque image synthétique en fonction d'une sortie du modèle de contrôle 10. En d'autres termes, une exécution du modèle génératif 12 est contrainte par la sortie du modèle de contrôle 10.

En particulier, le modèle génératif 12 est un modèle de diffusion, et plus particulièrement un modèle dit « *text-to-image* » en anglais (ou texte vers image en français), configuré pour calculer chaque image synthétique à partir de données textuelles descriptives de la situation prédéterminée (et plus précisément de la description textuelle associée à la situation représentée sur l'image fournie en entrée du modèle de transcription 8).

Comme cela a été mentionné précédemment, dans le cas où le modèle génératif 12 présente une architecture d'auto-encodeur, le modèle de contrôle 10 a été configuré en réalisant d'abord une copie des poids de l'encodeur du modèle génératif 12, puis en entraînant ladite copie à prendre en entrée une condition (par exemple, un masque de segmentation), différente des entrées habituelles du modèle génératif 12.

Le résultat d'un tel entraînement est connecté au reste du modèle de contrôle par « zéro convolution », c'est-à-dire une convolution 1x1 initialisée à 0 (pour éviter de l'injection de bruit au démarrage de l'entraînement) et qui est apprise au cours de l'entraînement. En outre, les sorties de la copie de l'encodeur sont connectées par d'autres « zero convolutions » au modèle génératif 12, qui est, lui, complètement figé.

Dans ce cas, ladite condition, transformée par le modèle de contrôle 10, et représentée dans l'espace latent, est simplement ajoutée à l'entrée du modèle génératif 12, également représentée dans son espace latent.

En variante, dans le cas où le modèle génératif 12 présente une architecture d'auto-encodeur, le modèle de contrôle 10 est susceptible d'être configuré pour mettre en oeuvre des extracteurs de caractéristiques (dits « *features extractors* » en anglais), entraînables, pour chaque condition externe, et dont les sorties sont ajoutées aux sorties d'étages prédéterminés de l'encodeur du modèle génératif 12.

### Entraînement du couple modèle de contrôle/modèle génératif

De préférence, le modèle de contrôle 10 et le modèle génératif 12 sont d'abord conjointement entraînés au cours de la phase d'entraînement mentionnée précédemment.

Plus précisément, au cours de la phase d'entraînement, le modèle de contrôle 10 et le modèle génératif 12 sont conjointement entraînés sur la base d'un jeu de données d'entraînement comprenant une pluralité d'images d'entraînement, réelles et/ou artificielles.

Dans ce cas, chaque image d'entraînement est associée :
- d'une part, à des métadonnées correspondantes (par exemple, déterminée au moyen du module de prétraitement 7) ; et
- d'autre part, à une description textuelle correspondante (par exemple, déterminée au moyen du modèle de transcription 8), modifiée pour préciser si l'image d'entraînement est une image réelle ou artificielle.

Par exemple, pour une image d'entraînement réelle représentant une scène A, la description textuelle devient « une image réelle de A ». Selon un autre exemple, pour une image d'entraînement artificielle représentant une scène B, la description textuelle devient « une image synthétique de B ».

En outre, dans la mesure où l'image réelle correspondant à chaque image d'entraînement artificielle n'est pas nécessairement disponible, le couple formé par le modèle de contrôle 10 et le modèle génératif 12 est, de préférence, entraîné de manière non supervisée. Plus précisément, le couple est entraîné pour reconstruire l'image d'entraînement (artificielle ou réelle) à partir des métadonnées et de la description textuelle modifiée correspondante. Cette technique aide les deux modèles 10, 12 à connaître le domaine de l'image attendue en sortie et, en même temps, à apprendre la différence entre les deux domaines (artificiel et réel).

Avantageusement, l'entraînement est réalisé de façon itérative. Dans ce cas, à chaque itération, tout ou partie des images synthétiques qui ont été calculées par le modèle génératif 12 et qui sont supposées être des images réelles sont associées à une information indicative du fait que de telles images sont des images artificielles, et introduites dans le jeu de données d'entraînement pour enrichir ledit jeu de données d'entraînement.

Une telle caractéristique est avantageuse, dans la mesure où elle guide le modèle de contrôle 10 et le modèle génératif 12 vers la production d'images synthétiques qui se rapprochent d'images réelles.

### Module de filtrage 16

Le module de filtrage 16 est configuré pour filtrer les images synthétiques calculées par le modèle génératif 12 afin de rejeter les images synthétiques ne répondant pas à un critère prédéterminé.

De préférence, pour réaliser un tel filtrage, le module de filtrage 16 est configuré pour déterminer les vectorisations, dans un espace vectoriel prédéterminé, associées aux images fournies à son entrée, et pour conserver ou non les images fournies par le modèle génératif sur la base desdites vectorisations.

En particulier, pour une image synthétique donnée délivrée en sortie du modèle génératif 12, le module de filtrage 16 est configuré pour rejeter ladite image synthétique si la vectorisation correspondante présente :
- une distance supérieure à une première distance prédéterminée, relativement à un premier secteur prédéterminé de l'espace vectoriel, le premier secteur étant représentatif d'images satisfaisantes (c'est-à-dire considérées comme réelles ou réalistes) d'un ensemble d'images d'étalonnage prédéterminé ; et/ou
- une distance inférieure à une deuxième distance prédéterminée, relativement à une deuxième secteur prédéterminé de l'espace vectoriel, le deuxième secteur étant représentatif d'images insatisfaisantes (c'est-à-dire considérées comme insuffisamment réalistes) de l'ensemble d'images d'étalonnage

Dans ce cas, le premier secteur est, par exemple, défini comme le barycentre des vectorisations des images satisfaisantes, ou encore comme un volume occupé par lesdites vectorisations. Similairement, le deuxième secteur est, par exemple, défini comme le barycentre des vectorisations des images insatisfaisantes, ou encore comme un volume occupé par lesdites vectorisations.

Par exemple, chaque image d'étalonnage est associée à une étiquette représentative du fait que ladite image est une image satisfaisante ou une image insatisfaisante.

Selon une première variante, pour réaliser un tel filtrage, le module de filtrage 16 est configuré pour analyser une texture des images synthétiques reçues en provenance du modèle génératif 12 afin de détecter les mauvaises générations présentant des artefacts.

Dans ce cas, l'espace vectoriel prédéterminé est l'espace des distorsions, qui est un espace dans lequel les images ayant des textures ou des types de distorsions similaires résultent en des vectorisations proches.

Plus précisément, l'espace de distorsions est un espace mathématique dans lequel les images dégradées (c'est-à-dire présentant des distorsions) sont projetées en fonction des types et intensités de distorsions appliquées. De cette façon, des images ayant subi des distorsions similaires se retrouvent proches les unes des autres dans cet espace vectoriel, facilitant l'évaluation de la qualité sans référence à une image parfaite.

Une telle approche est avantageuse, car elle conduit à une généralisation efficace, dans la mesure où elle classe les dégradations de manière intrinsèque, rendant l'évaluation de la qualité plus robuste et précise.

Par exemple, pour réaliser un tel filtrage dans l'espace des distorsions, le module de filtrage 16 est configuré pour mettre en oeuvre la méthode ARNIQA, décrite par Lorenzo Agnolucci et al. dans la prépublication digitale « ARNIQA: Learning Distortion Manifold for Image Quality Assessment », Proceedings of the IEEE/CVF Winter Conférence on Applications of Computer Vision, en 2024, référencée arXiv:2310.14918.

Selon une deuxième variante, pour réaliser un tel filtrage, le module de filtrage 16 est configuré pour analyser la similarité sémantique des images synthétiques (reçues en provenance du modèle génératif 12) par rapport à des images réelles (du jeu de données d'étalonnage) afin de détecter les images trop éloignées sémantiquement d'images réelles.

Par exemple, pour réaliser une telle analyse sémantique, le module de filtrage 16 est configuré pour mettre en oeuvre le modèle CLIP, décrit par Alec Radford et al. dans la prépublication digitale « Learning Transferable Visual Models From Natural Language Supervision », International Conférence on Machine Learning, PMLR, 2021, référencée arXiv:2103.00020.

### Unité de traitement 6

L'unité de traitement 6 est configurée pour calculer au moins une image synthétique à partir d'une image de référence.

Plus précisément, l'unité de traitement 6 est, de préférence, configurée pour d'abord mettre en oeuvre la phase d'entraînement préalablement mentionnée.

En outre, pour calculer chaque image synthétique, l'unité de traitement 6 est configurée pour mettre en oeuvre un procédé 20 de génération d'images synthétiques (figure 2).

Comme illustré par la figure 2, le procédé 20 de génération de données comprend une étape 22 de production de métadonnées et de description textuelle (dite « étape de production »), une étape de calcul 26 et une étape de stockage 32.

De préférence, le procédé 20 de génération de données comprend également une étape optionnelle de filtrage 28, comprise entre l'étape de calcul 26 et l'étape de stockage 32.

De préférence encore, le procédé 20 de génération de données comprend également une étape optionnelle d'annotation 30, comprise entre l'étape de calcul 26 et l'étape de stockage 32.

Avantageusement, le procédé 20 de génération de données comprend, en outre, une étape optionnelle d'entraînement 34, postérieure à l'étape de stockage 32.

### Phase d'entraînement préalable

L'unité de traitement 6 est configurée pour entraîner conjointement le couple comprenant le modèle de contrôle 10 et le modèle génératif 12, au cours de la phase d'entraînement mentionnée précédemment.

Plus précisément, l'unité de traitement 6 est configurée pour entraîner conjointement le couple sur la base du jeu de données d'entraînement décrit précédemment, de préférence selon un entraînement non supervisé.

Plus précisément encore, l'unité de traitement 6 est configurée de façon à entraîner le couple pour reconstruire chaque image d'entraînement (artificielle ou réelle) à partir des métadonnées et de la description textuelle modifiée correspondante.

Dans ce cas, l'image d'entraînement forme la sortie attendue.

Avantageusement, dans ce cas, l'unité de traitement 6 est configurée de façon à commander le module de prétraitement 7 pour qu'il altère, au cours de la phase d'entraînement, tout ou partie des métadonnées correspondant à chaque image d'entraînement avant de les transmettre au modèle de contrôle 10.

En outre, l'unité de traitement 6 est avantageusement configurée de façon à commander le modèle de transcription 8 pour qui altère, au cours de la phase d'entraînement, tout ou partie de la description textuelle correspondant à chaque image d'entraînement, avant de la transmettre au modèle génératif 12.

Avantageusement, l'unité de traitement 6 est configurée de sorte que l'entraînement soit réalisé de façon itérative. Dans ce cas, l'unité de traitement 6 est configuré pour enrichir, à chaque itération, le jeu de données d'entraînement avec tout ou partie des images synthétiques calculées par le modèle génératif 12 et supposées être des images réelles. Dans ce cas, les images synthétiques calculées sont associées à une information indicative du fait qu'il s'agit d'images synthétiques, artificielles.

### Etape de production 22

L'unité de traitement 6 est configurée pour, au cours de l'étape de production 22, fournir l'image de référence en entrée de chacun du module de prétraitement 7 et du modèle de transcription 8.

Il en résulte des métadonnées (délivrées, en sortie, par le module de prétraitement 7) et une description textuelle (délivrée, en sortie, par le modèle de transcription 8) associées à l'image de référence.

La description textuelle fournie par le modèle de transcription 8 est modifiée pour ajouter une donnée de type indicative du fait que l'image est une image réelle. Ceci a pour vocation d'amener le modèle génératif 12 à produire une image synthétique réaliste.

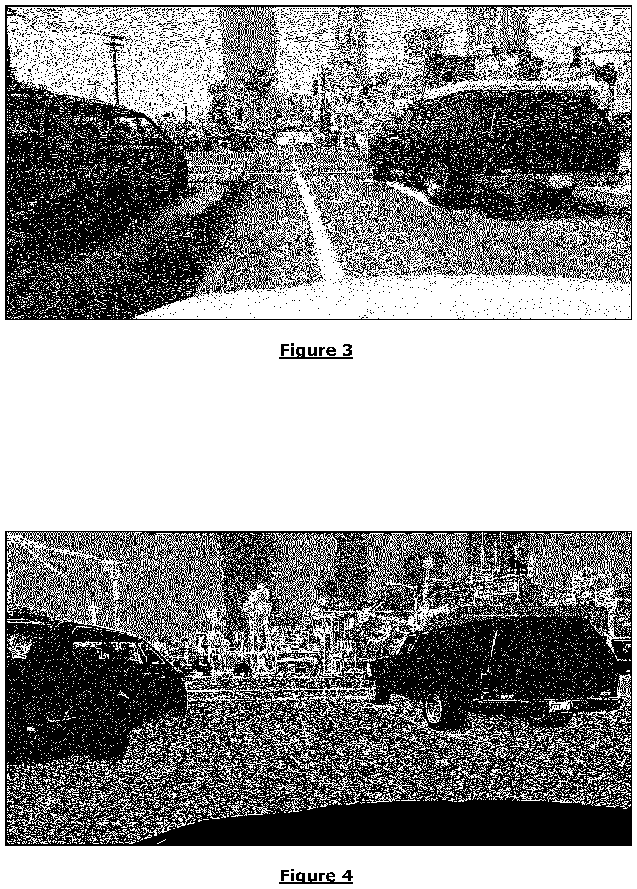

Un exemple d'image de référence est illustré par la figure 3. Comme cela apparaît sur la figure, la scène de référence est représentative d'un paysage urbain comprenant des véhicules, et plus précisément une rue avec des voitures sur une route encadrée de bâtiments.

La description textuelle correspondante fournie par le modèle de transcription 8 est « une image réelle d'une rue de ville avec des voitures qui roulent sur la route, et des bâtiments sur les côtés ».

En outre, la figure 4 illustre des métadonnées correspondantes, déterminées par le module de prétraitement 7. Plus précisément, de telles métadonnées comprennent des masques de segmentation relatifs aux véhicules, aux bâtiments encadrant la rue, à la chaussée et aux arbres. De telles métadonnées comprennent, en outre, les contours (tels que des contours de Canny) des objets représentés sur l'image de référence de la figure 3.

### ftape de calcul 26

En outre, l'unité de traitement 6 est configurée pour exécuter, au cours de l'étape de calcul 26, le modèle de contrôle 10. En particulier, l'unité de traitement 6 est configurée pour fournir, en entrée du modèle de contrôle 10, au moins une partie des métadonnées produites par le module de prétraitement 7, et ce afin d'obtenir une sortie correspondante du modèle de contrôle 10.

Par exemple, en référence aux exemples des figures 3 et 4, l'unité de traitement 6 est configurée pour exécuter le modèle de contrôle 10 sur la base des masques de segmentation et des contours de la figure 4, afin de produire une sortie correspondante.

L'unité de traitement 6 est, en outre, configurée pour exécuter, durant ladite étape de calcul 26, le modèle génératif 12. En particulier, l'unité de traitement 6 est configurée de façon à fournir, en entrée du modèle génératif 12, la sortie du modèle de contrôle 10 et la description textuelle déterminée par le modèle de transcription 8, pour calculer au moins une image synthétique associée à l'image de référence.

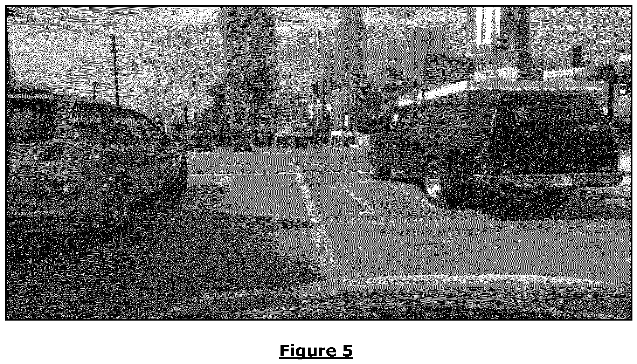

La figure 5 illustre un exemple d'image synthétique obtenue en fournissant, en entrée du modèle génératif 12, les métadonnées et la description textuelle associées à l'image de la figure 4.

Comme cela apparaît sur cette figure 5, l'image synthétique se distingue de l'image de référence par les modèles et les couleurs des véhicules représentés, tout en respectant leur forme générale.

### Etape de filtrage 28

Avantageusement, pour chaque image synthétique calculée, l'unité de traitement 6 est, en outre, configurée pour mettre en oeuvre le module de filtrage 16 pour rejeter les images synthétiques ne satisfaisant pas le critère prédéterminé.

### Etape d'annotation 30

L'unité de traitement 6 est, en outre, configurée pour, durant l'étape d'annotation 30, associer au moins une partie des métadonnées produites par le module de prétraitement 7 à chaque image synthétique.

En particulier, l'unité de traitement 6 est configurée pour associer, à chaque image synthétique, au moins une partie des métadonnées fournies en entrée du modèle de contrôle 10.

Une telle caractéristique est avantageuse, dans la mesure où elle contribue à la constitution de données susceptibles d'être utilisées dans le cadre de l'apprentissage supervisé d'un modèle d'intelligence artificielle, par exemple un modèle de vision par ordinateur (dit « modèle de vision »).

En particulier, les métadonnées associées aux images synthétiques produites comprennent des masques de segmentation si le modèle de vision est un modèle de segmentation, des classes si le modèle de vision est un modèle de classification, des boîtes englobantes si le modèle de vision est un modèle de détection, etc.

Il pourra être noté que l'ordre des étapes d'annotation 30 et de filtrage 28 peut être inversé lors de l'exécution du procédé 20 de génération d'images synthétiques.

### Etape de stockage 32

L'unité de traitement 6 est, en outre, configurée pour stocker, dans le jeu de données 14, durant l'étape de stockage 32, au moins une image synthétique calculée.

Avantageusement, dans le cas où l'étape de filtrage 28 a été mise en oeuvre, l'unité de traitement 6 est, en outre, configurée pour stocker, dans le jeu de données 14, uniquement les images synthétiques non rejetées par le module de filtrage 16. Une telle caractéristique est avantageuse, dans la mesure où elle confère au jeu de données 14 les qualités requises pour son utilisation dans le cadre de l'apprentissage d'un modèle d'intelligence artificielle, notamment un modèle de vision, en minimisant le risque de surapprentissage.

Avantageusement, dans le cas où l'étape d'annotation 30 a été mise en oeuvre, l'unité de traitement 6 est, en outre, configurée pour stocker, dans le jeu de données 14, chaque image synthétique en association avec les métadonnées correspondantes. Une telle caractéristique est avantageuse, dans la mesure où elle autorise une utilisation immédiate du jeu de données 14 dans le cadre de l'apprentissage supervisé d'un modèle d'intelligence artificielle, en particulier d'un modèle de vision.

### Etape d'entraînement 34

De préférence, l'unité de traitement 6 est configurée pour réaliser, au cours de l'étape d'entraînement 34, un entraînement d'un modèle de vision sur la base du jeu de données 14 construit à partir des images synthétiques calculées. Dans ce cas, l'unité de traitement 6 est configurée pour fournir, au modèle de vision, chaque image synthétique en guise d'entrée, les métadonnées associées formant une sortie attendue du modèle de vision pour ladite entrée.

Une telle caractéristique est avantageuse, dans la mesure où elle contribue à produire un modèle de vision par ordinateur qui est moins sujet au surapprentissage et au biais d'apprentissage que s'il avait été entraîné sur la base d'images synthétiques générées suivant les méthodes usuelles.

### Fonctionnement

Le fonctionnement du dispositif de calcul 2 va maintenant être décrit en référence aux figures 1 et 2.

Au cours d'une phase préliminaire d'entraînement, l'unité de traitement 6 entraîne conjointement le modèle de contrôle 10 et le modèle génératif 12 sur la base du jeu de données d'entraînement.

Puis, une fois l'entraînement terminé l'unité de traitement 6 met en oeuvre, pour chaque image de référence, le procédé 20 de génération d'images synthétiques.

Plus précisément, au cours de l'étape de production 22, l'unité de traitement 6 fournit l'image de référence en entrée de chacun du module de prétraitement 7 et du modèle de transcription 8.

Puis, au cours de l'étape de calcul 26, l'unité de traitement 6 fournit, en entrée du modèle de contrôle 10, au moins une partie des métadonnées produites par le module de prétraitement 7 et relatives à l'image de référence : il en résulte une sortie correspondante du modèle de contrôle 10.

En outre, durant l'étape de calcul 26, l'unité de traitement 6 fournit, en entrée du modèle génératif 12, la sortie du modèle de contrôle 10 et la description textuelle déterminée par le modèle de transcription 8, relatives à l'image de référence.

Il en résulte, en sortie du modèle génératif 12, au moins une image synthétique associée à l'image de référence.

Puis, au cours de l'étape optionnelle de filtrage 28, l'unité de traitement 6 met en oeuvre le module de filtrage 16 pour chaque image synthétique calculée, afin de rejeter les images synthétiques ne satisfaisant pas le critère prédéterminé.

Puis, au cours de l'étape optionnelle d'annotation 30, l'unité de traitement 6 associe au moins une partie des métadonnées produites par le module de prétraitement 7 à chaque image synthétique calculée.

Puis, durant l'étape de stockage 32, l'unité de traitement 6 stocke, dans le jeu de données 14, au moins une image synthétique calculée.

Avantageusement, dans le cas où l'étape de filtrage 28 a été mise en oeuvre, l'unité de traitement 6 stocke, dans le jeu de données 14, uniquement les images synthétiques non rejetées par le module de filtrage 16.

Avantageusement, dans le cas où l'étape d'annotation 30 a été mise en oeuvre, l'unité de traitement 6 stocke, dans le jeu de données 14, chaque image synthétique en association avec tout ou partie des métadonnées correspondantes.

Puis, au cours de l'étape optionnelle d'entraînement 34, l'unité de traitement 6 réalise un entraînement d'un modèle de vision sur la base du jeu de données 14 construit à partir des images synthétiques calculées.

Bien entendu l'invention n'est pas limitée aux exemples qui viennent d'être décrits.

## Revendications

1. Procédé (20) de génération d'images synthétiques, le procédé étant mis en oeuvre par ordinateur et comprenant les étapes :
- génération (22), à partir d'une image de référence :
• d'une description textuelle d'une scène représentée sur ladite image de référence ; et
• de métadonnées relatives à la scène représentée sur ladite image de référence et/ou à ladite image de référence ;
- fourniture (26), en entrée d'un modèle de contrôle (10) couplé à un modèle génératif (12), d'au moins une partie des métadonnées générées ;
- calcul (26), au moyen du modèle génératif (12), d'au moins une image synthétique à partir d'une sortie du modèle de contrôle et de la description textuelle générée relatives à l'image de référence ; et
- stockage (34), dans un jeu de données (14), d'au moins une image synthétique calculée.

2. Procédé (20) selon la revendication 1, comprenant, préalablement à l'étape de calcul (26), une inclusion, dans la description textuelle, d'une information indicative du fait que l'image de référence est une image réelle.

3. Procédé selon la revendication 1 ou 2, comprenant, en outre, une étape de filtrage (28) comprenant un rejet de chaque image synthétique ne satisfaisant pas un critère prédéterminé.

4. Procédé selon la revendication 3, dans lequel l'étape de filtrage (28) comprend :
- une détermination d'une vectorisation de l'image synthétique calculée dans un espace vectoriel prédéterminé ;
- un rejet de l'image synthétique si la vectorisation correspondante présente :
• une distance supérieure à une première distance prédéterminée, relativement à un premier secteur prédéterminé de l'espace vectoriel, le premier secteur étant représentatif d'images satisfaisantes d'un ensemble d'images d'étalonnage prédéterminé ; et/ou
• une distance inférieure à une deuxième distance prédéterminée, relativement à une deuxième secteur prédéterminé de l'espace vectoriel, le deuxième secteur étant représentatif d'images insatisfaisantes de l'ensemble d'images d'étalonnage.

5. Procédé selon la revendication 4, dans lequel l'espace vectoriel prédéterminé est un espace des distorsions ou un espace sémantique.

6. Procédé selon l'une quelconque des revendications 1 à 5, comprenant, en outre, une association (30), à chaque image synthétique stockée dans le jeu de données (14), d'au moins une partie des métadonnées produites à l'issue de l'étape de génération (22).

7. Procédé selon la revendication 6, comprenant, en outre, un entraînement (34) d'un modèle de vision par ordinateur sur la base du jeu de données (14), chaque image synthétique formant une entrée du modèle de vision par ordinateur, les métadonnées associées formant une sortie attendue du modèle de vision par ordinateur pour ladite entrée.

8. Procédé selon l'une quelconque des revendications 1 à 5, dans lequel le modèle de contrôle (10) et le modèle génératif (12) ont été préalablement entraînés conjointement au cours d'une phase d'entraînement, sur la base d'un jeu de données d'entraînement comprenant une pluralité d'images d'entraînement réelles et/ou artificielles,
chaque image d'entraînement étant associée à :
- des métadonnées correspondantes relatives à la scène représentée sur ladite image d'entraînement et/ou à ladite image d'entraînement ; et
- une description textuelle correspondante comprenant, en outre, une information indicative du fait que l'image d'entraînement est une image réelle ou une image artificielle ;
la phase d'entraînement comprenant, pour chaque image d'entraînement
- une fourniture des métadonnées correspondantes au modèle de contrôle (10) ; et
- un calcul, par le modèle génératif (12), d'une image synthétique à partir de la description textuelle et d'une sortie du modèle de contrôle, l'image d'entraînement formant une sortie attendue du modèle génératif (12).

9. Procédé selon la revendication 8, comprenant une altération d'au moins une partie des métadonnées préalablement à leur fourniture au modèle de contrôle, l'altération comportant, de préférence, un ajout d'un bruit aléatoire, une suppression aléatoire d'objets dans des masques de segmentation, et/ou une distorsion de la segmentation.

10. Procédé selon la revendication 8 ou 9, dans lequel la phase d'entraînement comprend, en outre, un enrichissement du jeu de données d'entraînement avec tout ou partie des images synthétiques calculées, chaque image synthétique ajoutée au jeu de données d'entraînement étant associée à une description textuelle comprenant une information indicative du fait que ladite image synthétique est une image artificielle.

11. Programme d'ordinateur comprenant des instructions exécutables qui, lorsqu'elles sont exécutées par ordinateur, mettent en en oeuvre les étapes du procédé selon l'une quelconque des revendications 1 à 10.

12. Dispositif de calcul (2) pour la génération d'images synthétiques, le dispositif de calcul (2) comprenant :
- une unité de traitement (6) ; et
- une mémoire (4) configurée pour stocker :
• un modèle génératif (12) ; et
• un modèle d'intelligence artificielle couplé au modèle génératif (12) et formant un modèle de contrôle (10) du modèle génératif (12) ;
• un jeu de données (14),
l'unité de traitement (6) étant configurée pour :
- générer (22), à partir d'une image de référence :
• une description textuelle d'une scène représentée sur ladite image de référence ; et
• des métadonnées relatives à la scène représentée sur ladite image de référence et/ou à ladite image de référence ;
- fournir (26) au moins une partie des métadonnées générées en entrée du modèle de contrôle (10) ;
- mettre en oeuvre le modèle génératif (12) pour calculer (26) au moins une image synthétique à partir d'une sortie du modèle de contrôle (10) et de la description textuelle générée relatives à l'image de référence ; et
- stocker (34) au moins une image synthétique calculée dans le jeu de données (14).
